Europäisches Patentamt

(19) European Patent Office

Office européen des brevets

(11) Publication number: **0 002 949**
**B1**

(12) **EUROPEAN PATENT SPECIFICATION**

(45) Date of publication of patent specification: **28.07.82**

(51) Int. Cl.³: **B 65 B 35/14,** B 65 G 25/02
//B65B25/06

(21) Application number: **78300894.9**

(22) Date of filing: **22.12.78**

(54) Process and apparatus for loading articles into flexible containers.

| | |
|---|---|
| (30) Priority: **27.12.77 US 865039** | (73) Proprietor: **W.R. GRACE & CO.**<br>**Grace Plaza 1114 Avenue of the Americas**<br>**New York New York 10036 (US)** |
| (43) Date of publication of application:<br>**11.07.79 Bulletin 79/14** | |
| | (72) Inventor: **Howe, Milton A, Jr.**<br>**505 Perrin Drive**<br>**Spartanburg South Carolina 29302 (US)** |
| (45) Publication of the grant of the patent:<br>**28.07.82 Bulletin 82/30** | |
| | (74) Representative: **Barlow, Roy James et al,**<br>**J.A.KEMP & CO. 14, South Square Gray's Inn**<br>**London WC1R 5EU (GB)** |
| (84) Designated Contracting States:<br>**DE FR GB** | |
| (56) References cited:<br>**FR - A - 2 092 826**<br>**US - A - 3 565 241**<br>**US - A - 3 776 351**<br>**US - A - 3 973 665** | |

Courier Press, Leamington Spa, England.

Process and apparatus for loading articles into flexible containers.

The present invention relates generally to the loading of articles into containers, and more particularly to a process and apparatus for loading articles into flexible plastic containers. Meat articles have conventionally been manually loaded into flexible plastic packages for either shipment or display. While many aspects of meat packaging process had been refined to a high degree of automation, the actual step of placing meat articles into containers has remained a substantially manual operation wherein an operator receives the cut of meat from a conveyor, selects an appropriately sized container and slides the meat from a shelf into the container. The subsquent processing steps of vacuumizing, clipping and shrinking are highly automated but remain dependent upon being supplied from a manual container loading step.

An attempt to overcome the shortcomings of prior art manual handling of meat cuts is described in United States Patent No. 3,942,624. The apparatus described therein is a bag loading apparatus which comprises a cantilevered conveyor system such that a meat article may be placed on one end of the conveyor while a bag is draped around the cantilevered end of the conveyor. The movement of the conveyor causes the meat article to move along the conveyor.

In the meat handling art it is necessary to maintain a high degree of sanitary cleanliness of all meat-contacting surfaces, and the use of conveyor belts may involve trapping of debris between the underside of the belts and the belt pulleys; this is not conducive to such sanitary conditions. Another shortcoming of the cantilevered belt conveyor device resides in problems associated with tracking and maintaining parallelism of the long narrow cantilevered belt conveyors.

These disadvantages can be mitigated by the use of a so-called walking beam conveyor, for example of the type disclosed in U.S. Patent Specification No. 3,776,351. However, such conveyors involve large beams reciprocating back and forth and are disadvantageous for reasons of operator safety where the beams are "walking" an article into a hand-held flexible container.

It is an object of this invention to provide an improved process for loading articles into containers.

According to the present invention we provide a process for loading articles into a flexible container, comprising the steps of: placing an article upon parallel beams extending in a direction of progression with the beams arranged so as to be cantilevered beyond beam supporting means along said direction of progression; placing a flexible container over said cantilevered ends of the beams on which the article is placed; moving a first set of said beams horizontally along said direction of progression while the article is supported thereon; raising a second set of beams to leave the article supported on said second set of beams; moving said first set of beams in a retreating direction opposite said direction of progression while said second set of beams holds said article above said level; lowering said second set of beams to support the article once more on said first set of beams; moving said first set of beams once more in the direction of progression while said article is supported thereon; and continuing operation until the article has entered the flexible container; wherein oscillating drive to the first and second sets of beams is provided by a rotatable cam having a cam surface for vertically reciprocating said second set of beams and having attached thereto means for horizontally reciprocating said first set of beams.

The invention also provides a bag loader comprising two sets of beams of which one set is horizontally movable to and fro along a direction of article progression and the other set is vertically movable so as to be positioned alternately above and below the first set, said beams being laterally spaced and cantilevered in the direction of article advance and spaced apart at their respective ends so as to permit insertion of a container both between and beneath said beams at the ends thereof; and means for providing oscillating drive to said first and second sets of beams so as to allow an article to be advanced on said horizontally movable first set of beams while they are above the second set of beams and to be supported by said second set of beams during retreating of said horizontally movable first set of beams; wherein said means for providing oscillating drive is a rotatable cam for vertically reciprocating said vertically movable second set of beams, said cam having attached thereto means for horizontally reciprocating said horizontally movable first set of beams.

In order that the present invention may more readily be understood the following description is given, merely by way of example, with reference to the accompanying drawings, in which:—

Figure 1 is a perspective view of one form of apparatus for carrying out the process in accordance with this invention;

Figure 2 is a graph illustrating the movement and synchronisation of the horizontally and vertically movable beams of the apparatus of Figure 1; and

Figures 3 and 4 depict one form of motion-producing means for the apparatus shown in Figure 1.

It has been found that an apparatus having, in combination, a plurality of cantilevered beams divided into two sets of which one set is movable in a horizontal mode and another set is movable in a vertical mode, provides a conveying function to a packaging station such that meat articles of varying sizes may be packaged at the end of a cantilevered conveyor without the inconveniences associated with conveyors utilising conventional conveyor belts.

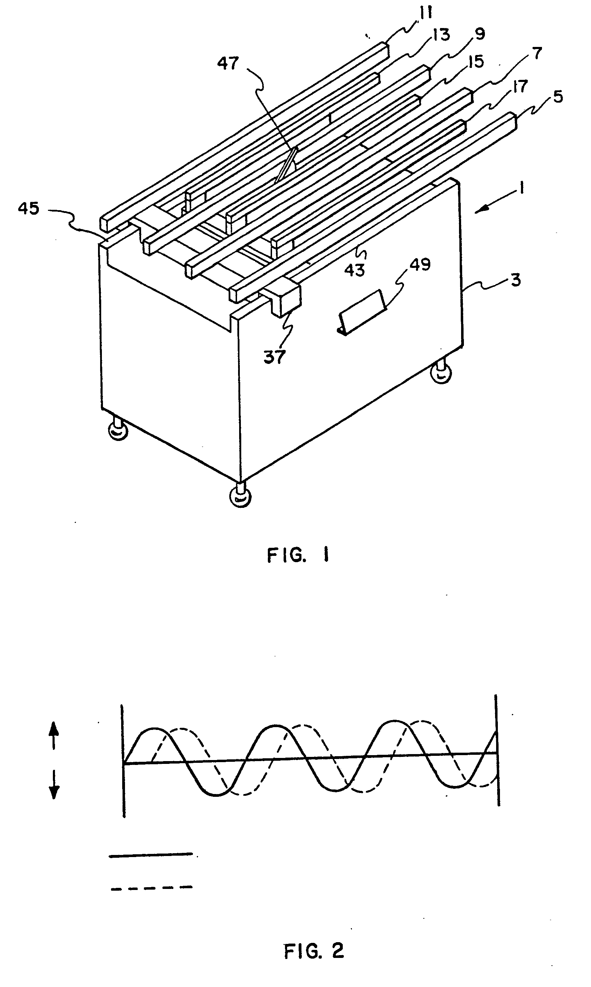

Figure 1 depicts in perspective form a cantilevered walking beam bag loader for use with the process of this invention. The apparatus 1 operates in normal walking beam fashion with two sets of beams each set being operable in a different dimensional mode. The apparatus comprises a base portion 3 supporting the movable beam assembly on the upper portion thereof. The beams are of two types, beams 5, 7, 9 and 11 being operable in the horizontal mode while beams 13, 15 and 17 are operable in the vertical mode. The horizontally movable beams reciprocate in a horizontal plane while the vertically movable beams reciprocate in a vertical plane. The relative coordination of the two movements is such as to produce a forward motion of an article resting on the upper surfaces of the beam assembly.

Figure 2 depicts, in the form of a graph, the desired synchronisation of the two movements.

The solid line represents the movement of the horizontal beams. Thus when the gradient of the solid line curve is upward, i.e. positive, the horizontal bars are moved forward, and when the gradient is negative the horizontal bars are moving in the reverse direction.

The broken line illustrates the movement of the vertically movable beams such that when the gradient of the broken line is upward the vertical beams are moving toward their elevated position. Conversely when the gradient of the broken line is negative the vertical beams are moving toward their depressed position. The abscissa, which represents time in arbitrary units, at the zero position represents the attainment of the level of the horizontally movable beams by the vertically movable beams, and also the midway travel point fot the horizontally reciprocable beams, i.e., a point halfway between the forward and reverse extent of reciprocal movement.

Thus, as the horizontally movable beam moves forward to the extent of its forward position, the vertically movable beams are below the level of the horizontally movable beams.

At the end of the forward extent of horizontal movement, the vertically movable beams rise through the level of the horizontally movable beams to lift a conveyed article above such level while the horizontally movable beams reciprocate towards the reverse position. As the horizontally movable beams reach the end of the reverse extent to move forward again, the vertically movable beams move towards their depressed position beneath the plane of the horizontally movable beams, such that an article on the conveyor will rest on the horizontally movable beams during the forward motion thereof.

Such movement continues in a cyclic fashion to convey an article resting on the surface of the beams in a forward direction, i.e., a direction of desired article progression.

The rate of article progression can be readily controlled by controlling the amplitude and frequency of the horizontally movable beams. For example, an amplitude of 20.32 cm (eight inches) at 96 oscillations per minute would give a forward speed of travel of 19.50 m/mn (64 feet per minute) for a conveyed article. It is desirable to have a large amplitude so as to reduce the number of starts per unit of conveyed distance.

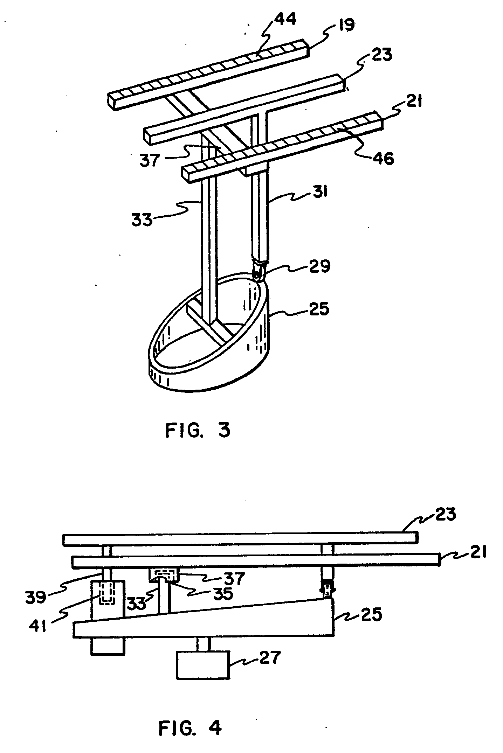

Figures 3 and 4 show the single power generating means utilised to provide both the horizontal and vertical motion. For purposes of simplicity only two horizontally movable beams 19 and 21, and one vertically movable beam 23, are shown in Figure 3 of the drawings. As is readily apparent from this Figure, the vertically movable beam operates from a rotatable cylinder cam 25 which provides the vertical movement required of the beam 23. Cam 25 is operable by power source such as the motor 27 shown in Figure 4 of the drawings. Cam follower roller 29 carried at the bottom of vertical shaft 31 is operable for reciprocating the beam 23 in a vertical plane upon rotation of cam 25.

Also associated with rotatable cam 25, and carried eccentrically with respect thereto, is a vertical beam 33 which is mounted eccentrically of the cam 25 and rides within a longitudinal slot 35 (not shown in Figure 3) of a support beam 37 attached to horizontally reciprocable beams 19 and 21. Upon rotation of cam 25, the vertical beam 33 riding within the slot 35 imparts a horizontal reciprocating movement to horizontally movable beams 19 and 21. It is to be understood that various associated support and stabilising devices may be incorporated into this structure, for example to ensure that beam 33 remains vertical during its orbiting movement about a vertical axis. One such device for stabilising the vertically movable beams is illustrated in Figure 4. The rear portion of vertically movable beam 23 has a stabilising rod 39 which rides within cylinder 41 for purposes of stabilising the motion of the vertically reciprocable beam 23. In a like manner the horizontally movable beams are stabilised by mounting the support beam 37 slidably on tracks 43 and 45 as illustrated in Figure 1 of the drawings.

In operation it is preferred that the elevation of the vertically movable beam above the plane of the horizontally movable beams be no greater than 2.54 cm (one inch) at any time. It has been found that the greater the maximum elevation the greater the tendency is for conveyed objects to bounce along the conveyor path. For this reason the amount of elevation should be minimal. It is additionally preferred that the underside of the vertically movable beams should not rise above the plane of the upper surface of the horizontally movable beams, as a safety feature to circumvent the possibility of an operator's finger being trapped beneath the vertically movable beams.

An additonally preferred feature of this invention is that where scores or tracks are provided along the surface of the beams these scores or tracks are confined to the horizontally reciprocable beams. Such scoring is known in belt conveyor bag loaders but has to be provided on all the belts. As indicated above, such scoring has disadvantages, and these can be minimised with the present embodiment where it is envisaged that only the horizontally movable beams are scored.

The scores or tracks are illustrated in Figure 3 as scores 44 and 46. The use of such scores or tracks prevents a conveyed object such as a piece of fresh red meat from sliding on the beams during the conveying process. An unexpected advantage of utilising scores only on the horizontally reciprocable beams is that in the event of a power failure, the vertically reciprocable beams may be moved to their elevated position and utilised as a sliding surface. This is a significant improvement over the prior art which, during a breakdown or power failure, required manual movement of meat articles without contacting the otherwise non-sliding surfaces of conveying belts.

An article-responsive control means is provided for deactivating and activating the operation of power source 27. For this purpose a depressible trigger 47 is illustrated in Figure 1 of the drawings which deactivates source 27 upon arrival of a conveyed article thereon. The deactivation of the drive to the beams permits an operator to drape an appropriately sized flexible bar through and under the appropriate number of beams for receipt of the conveyed article. Preferably a knee actuated lever, such as is shown at 49, permits the operator to reactivate the motor 27 when the bag is properly positioned for receipt of the conveyed article.

While the embodiment discussed above is illustrated and described in terms of an arrangement wherein alternate beams operate in a mode different from the next adjacent beams, it is readily understood that, if desirable, two or more adjacent beams of the apparatus may be operable in the similar mode, so long as the net effect is to provide a conveying action in the desired direction of article progression.

It is thus seen that the process of this invention provides a novel technique whereby articles may be conveyed into containers. The process of this invention further uses an apparatus which does such conveying without the use of conventional belts and which provides a sliding surface in the event of a power failure while at the same time providing an adequate gripping surface when in operation.

**Claims**

1. A process for loading articles into a flexible container, comprising the steps of: placing an article upon parallel beams extending in a direction of progression with the beams (5, 7, 9, 11, 13, 15, 17) arranged so as to be cantilevered beyond beam supporting means along said direction of progression; placing the flexible container over said cantilevered ends of the beams on which the article is placed; moving a first set (5, 7, 9, 11 or 21) of said beams horizontally along said direction of progression while the article is supported thereon; raising a second set (13, 15, 17 or 23) of beams to leave the article supported on said second set (13, 15, 17 or 23) of beams; moving said first set (5, 7, 9, 11 or 21) of beams in a retreating direction opposite said direction of progression while said second set (13, 15, 17, 19 or 23) of beams holds said article above said level; lowering said second set of beams to support the article once more on said first set of beams; moving said first set of beams once more in the direction of progression while said article is supported thereon; and continuing operation until the article has entered the flexible container; wherein oscillating drive to the first and second sets of beams is provided by a rotatable cam (25) having a cam surface for vertically reciprocating said second set of beams (13, 15, 17 or 23) and having attached thereto means (33) for horizontally reciprocating said first set of beams (5, 7, 9, 11 or 21).

2. A process according to claim 1, wherein the raising and lowering movement of said second set (13, 15, 17 or 23) and the horizontal advancing and retreating movement of said first set (5, 7, 9, 11 or 21) of beams are synchronised to provide a swinging motion to convey an article resting on said two sets of beams in said direction of progression.

3. A process according to any one of the preceding claims, wherein said flexible container is partially inserted between and under only some of said beams to receive said article being conveyed by said beams.

4. A process according to claim 3, further including the step of deactivating the motion of said beams prior to inserting said container and reactivating said motion when said container is in position.

5. A process according to claim 4, wherein the presence of an article on the conveyor is detected by means (47) responsive to the presence of an article on the conveying surface and for automatically interrupting the oscillating beam movement in response thereto.

6. A process according to claim 5, further including the step of overriding said article responsive means and reactivating said reciprocating beam movement after deactivation by said detecting means.

7. A process according to any one of the preceding claims wherein said beams of the first set comprise an upper surface having scores (44, 46) therein to provide a high friction surface thereon.

8. A bag loader comprising two sets of beams (5, 7, 9, 11, 13, 15, 17 or 21, 23), of which one set (5, 7, 9, 11 or 21) is horizontally movable to and fro along a direction of article progression and the other set (13, 15, 17 or 23) is vertically movable so as to be positioned alternately above and below the first set, said beams (5, 7, 9, 11, 13, 15, 17 or 21, 23) being laterally spaced and cantilevered in the direction of article advance and spaced apart at their respective ends so as to permit insertion of a container both between and beneath said beams at the ends thereof; and means (25, 33) for providing oscillating drive to said first and second sets of beams so as to allow an article to be advanced on said horizontally movable first set of beams while they are above the second set of beams and to be supported by said second set of beams during retreating of said horizontally movable first set of beams; wherein said means for providing oscillating drive is a rotatable cam (25) for vertically reciprocating said vertically movable second set of beams, said cam having attached thereto means (33) for horizontally reciprocating said horizontally movable first set of beams.

9. Apparatus according to claim 8, wherein said beams of said first set comprise an upper surface having scores (44, 46) therein to provide a high friction surface thereon.

10. Apparatus according to claim 8 or 9, further including means (47) for detecting the presence of an article on the conveying surface and for deactivating said means (25, 33) for providing oscillating beam movement in response thereto.

11. Apparatus according to claim 10, including means (49) for reactivating said means for providing reciprocating beam movement after deactivation by said detecting means.

**Patentansprüche**

1. Verfahren zum Einbringen von Gegenständen in einen flexiblen Behälter, welches die Schritte umfaßt; Auflegen eines Gegenstandes auf parallele Stangen, die sich in einer Vorschubrichtung erstrecken und wobei die Stangen (5, 7, 9, 11, 13, 15, 17) so angeordnet sind, daß sie in der Vorschubrichtung über Stangenstützeinrichtungen hinausragen; der flexible Behälter wird über die freitragenden Enden der Stangen, auf die der Gegenstand gelegt wird, angebracht; horizontales Bewegen einer ersten Gruppe (5, 7, 9, 11 oder 21) der Stangen in Vorschubrichtung bei darauf liegendem Gegenstand; Anheben einer zweiten Gruppe (13, 15, 17 oder 23) der Stangen zur Belassung des Gegenstandes auf der zweiten Gruppe (13, 15, 17 oder 23) der Stangen liegend; Bewegung der ersten Gruppe (5, 7, 9, 11 oder 21) der Stangen in eine Rückzugsrichtung entgegen der Vorschubrichtung während die zweite Gruppe (13, 15, 17, 19 oder 23) der Stangen den Gegenstand über dem erwähnten Niveau halten; Absenken der zweiten Gruppe von Stangen zur erneuten Abstützung des Gegenstandes auf der ersten Gruppe von Stangen; weitere Bewegung der ersten Stangen in Vorschubrichtung bei darauf aufliegendem Gegenstand; und Fortsetzung des Vorganges bis der Gegenstand in den flexiblen Behälter eingetreten ist; wobei ein oszillierender Antrieb für die erste und zweite Gruppe von Stangen durch eine drehbare Nocke (25) vorgesehen ist, die eine Nockenfläche zur vertikalen Hin- und Herbewegung der zweiten Gruppe von Stangen (13, 15, 17 oder 23) aufweist und daran befestigte Einrichtungen (33) zur horizontalen Hin- und Herbewegung der ersten Gruppe von Stangen (5, 7, 9, 11 oder 21) besitzt.

2. Verfahren nach Anspruch 1, wobei die Anhebe- und Absenkbewegung der zweiten Gruppe (13, 15, 17 oder 23) und die horizontale Vorschub- und Zurückziehbewegung der ersten Gruppe (5, 7, 9, 11 oder 21) der Stangen synchronisiert sind, um eine schwingende Bewegung zur Förderung eines auf den zwei Gruppen von Stangen ruhenden Gegenstandes in Vorschubrichtung zu schaffen.

3. Verfahren nach einem der vorhergehenden Ansprüche, wobei der flexible Behälter teilweise zwischen und unter lediglich einige der Stangen eingesetzt ist, um den von den Stangen geförderten Gegenstand aufzunehmen.

4. Verfahren nach Anspruch 3, welches außerdem den Schritt einer Deaktivierung der Bewegung der Stangen vor dem Einsetzen des Behälters und eine Reaktivierung der Bewegung bei in Stellung gebrachtem Behälter umfaßt.

5. Verfahren nach Anspruch 4, wobei die Anwesenheit eines Gegenstandes auf dem Förderer durch eine Einrichtung (47) festgestellt wird, welche auf die Anwesenheit eines Gegenstandes auf der Förderfläche anspricht und die in Abhängigkeit davon zur automatischen Unterbrechung der schwingenden Stangenbewegung dient.

6. Verfahren nach Anspruch 5, welches außerdem den Schritt eines Übergehens der Gegenstandsansprechungseinrichtung und eine Reaktivierung der hin- und hergehenden Stangenbewegung nach der Deaktivierung durch die Erkennungseinrichtung umfaßt.

7. Verfahren nach einem der vorhergehenden Ansprüche, wobei die Stangen der ersten Gruppe eine obere Fläche mit Kerben (44, 46) aufweist, um eine Fläche mit hohem Reibungskoeffizienten zu ergeben.

8. Beutelladevorrichtung mit zwei Gruppen von Stangen (5, 7, 9. 11, 13, 15, 17 oder 21, 23) von denen eine Gruppe (5, 7, 9, 11 oder 21) in Richtung eines Gegenstandvorschubs hin- und herbewegbar ist und bei der die andere Gruppe (13, 15, 17 oder 23) vertikal bewegbar ist, so daß sie abwechselnd über und unter die erste Gruppe positionierbar ist, wobei die Stangen (5, 7, 9, 11, 13, 15, 17 oder 21, 23) in Querrichtung beabstandet und in Richtung des Gegenstandvorschubs freitragend und an ihren jeweiligen Enden beabstandet sind, um das Einsetzen eines Behälters sowohl zwischen als auch unter die Stangen an deren Enden zu gestatten; und mit Einrichtungen (25, 33) zur Schaffung eines schwingenden Antriebs für die erste und zweite Gruppe von Stangen, um einen Gegenstand auf der horizontal bewegbaren ersten Gruppe von Stangen vorschieben zu lassen, während sie sich über der zweiten Gruppe von Stangen befinden und um den Gegenstand auf der zweiten Gruppe von Stangen während des Zurückziehens der horizontal bewegbaren ersten Gruppe von Stangen abzustützen; wobei die Einrichtung zur Schaffung eines schwingenden Antriebs eine drehbare Nocke (25) zur ventikalen Hin- und Herbewegung der vertikal bewegbaren zweiten Gruppe von Stangen ist und wobei die Nocke daran befestigte Einrichtungen (33) zur horizontalen Hin- und Herbewegung der horizontal bewegbaren ersten Gruppe von Stangen aufweist.

9. Vorrichtung nach Anspruch 8, wobei die Stangen der ersten Gruppe eine obere Fläche mit Kerben (44, 46) zur Schaffung einer Fläche mit hohem Reibungskoeffizienten aufweist.

10. Vorrichtung nach Anspruch 8 oder 9, welche außerdem Einrichtungen (47) zur Erkennung der Anwesenheit eines Gegenstandes auf der Förderfläche und in Abhängigkeit davon zur Deaktivierung der Einrichtung (25, 33) für die Schaffung einer schwingenden Stangenbewegung aufweist.

11. Vorrichtung nach Anspruch 10, mit einer Einrichtung (49) zur Reaktivierung der Einrichtung für die Schaffung einer hin- und hergehenden Stangenbewegung nach der Deaktivierung durch die Erkennungseinrichtung.

**Revendications**

1. Procédé pour introduire des articles dans un récipient flexible, comprenant les étapes de: placer un article sur des poutres parallèles s'étendant dans une direction de progression avec les poutres (5, 7, 9, 11, 13, 15, 17) agencées afin d'être en porte-à-faux au-delà d'un moyen de support des poutres le long de ladite direction de progression; placer le récipient flexible sur lesdites extrémités en porte-à-faux des poutres où est placé l'article; déplacer un premier groupe (5, 7, 9, 11 ou 21) desdites poutres horizontalement le long de ladite direction de progression tandis que l'article y est supporté; élever un second groupe (13, 15, 17 ou 23) de poutres pour laisser l'article supporté sur ledit second groupes de poutres (13, 15, 17 ou 23); déplacer ledit premier groupe (5, 7, 9, 11 ou 21) de poutres en direction de retrait opposée à ladite direction de progression tandis que ledit second groupe (13, 15, 17, 19 ou 23) de poutres maintient ledit article au-dessus dudit niveau; abaisser ledit second groupe de poutres pour supporter l'article une fois de plus sur ledit premier groupe de poutres; déplacer ledit premier groupe de poutres une fois de plus dans la direction de progression tandis que ledit article y est supporté; et continuer l'opération jusqu'à ce que l'article soit entré dans le récipient flexible; où l'entraînement oscillant des premier et second groupes de poutres est obtenu par une came rotative (25) ayant une surface de came pour donner audit second groupe de poutres (13, 15, 17 ou 23) un mouvement verticalement alternatif et où est attaché un moyen (33) pour donner audit premier groupe de poutres (5, 7, 9, 11 ou 21) un mouvement horizontalement alternatif.

2. Procédé selon la revendication 1 où le mouvement d'élévation es d'abaissement dudit second groupe (13, 15, 17 ou 23) et le mouvement d'avance et de recul horizontal dudit premier groupe (5, 7, 9, 11 ou 21) de poutres sont synchronisés pour produire un mouvement oscillant pour transporter un article reposant sur lesdits deux groupes de poutres dans ladite direction de progression.

3. Procédé selon l'une quelconque des revendications précédentes, où ledit récipient flexible est partiellement inséré entre et en dessous seulement de certaines desdites poutres pour recevoir ledit article qui est transporté par lesdites poutres.

4. Procédé selon la revendication 3 comprenant de plus l'étape de désactiver le mouvement desdites poutres avant d'insérer ledit récipient et de réactiver ledit mouvement quand ledit récipient est en position.

5. Procédé selon la revendication 4, où la présence d'un article sur le convoyeur est détectée par un moyen (47) répondant à la présence d'un article sur la surface de transport et pour interrompre automatiquement le mouvement oscillant des poutres en réponse.

6. Procédé selon la revendication 5 comprenant de plus l'étape d'outrepasser le moyen répondant à l'article et de réactiver le mouvement alternatif des poutres après désactivation par ledit moyen de détection.

7. Procédé selon l'une quelconque des revendications précédentes, où lesdites poutres du premier groupe comprennent une surface supérieure ayant des entailles (44, 46) pour y former une surface à frottement élevé.

8. Chargeur de sacs comprenant deux groupes de poutres (5, 7, 9, 11, 13, 15, 17 ou 21, 23) dont un groupe (5, 7, 9, 11 ou 21) est horizontalement mobile vers et au loin le long d'une direction de progression d'un article et l'autre groupe (13, 15, 17 ou 23) est verticalement mobile afin d'être placé alternativement au-dessus et en dessous du premier groupe, lesdites poutres (5, 7, 9, 11, 13, 15, 17 ou 21, 23) étant latéralement espacées et en porte-à-faux dans la direction de l'avance de l'article et espacées à leurs extrémités respectives afin de permettre l'insertion d'un récipient à la fois entre et en dessous desdites poutres à leurs extrémités; et un moyen (25, 33) pour appliquer un entraînement oscillant auxdits premier et second groupes de poutres afin de permettre à un article d'avancer sur ledit premier groupe de poutres horizontalement mobiles tandis qu'elles sont au-dessus du second groupe de poutres et d'être supporté par ledit second groupe de poutres pendant le retrait dudit premier groupe de poutres horizontalement mobiles; où ledit moyen pour produire un entraînement oscillant est une came rotative (25) pour donner audit second groupe de poutres verticalement mobiles son mouvement alternatif, à ladite came étant attaché un moyen (33) pour donner audit premier groupe de poutres horizontalement mobiles, son mouvement alternatif horizontal.

9. Dispositif selon la revendication 8, où lesdites poutres dudit premier groupe comprennent une surface supérieure ayant des entailles (44, 46) afin d'y former une surface à frottement élevé.

10. Dispositif selon la revendication 8 ou 9 comprenant de plus un moyen (47) pour détecter la présence d'un article sur la surface de transport et pour désactiver ledit moyen (25, 33) pour produire un mouvement oscillant des poutres en réponse.

11. Dispositif selon la revendication 10 comprenant un moyen (49) pour réactiver ledit moyen pour produire un mouvement alternatif des poutres après désactivation par ledit moyen détecteur.

FIG. 1

FIG. 2

FIG. 3

FIG. 4